# EUROPÄISCHE PATENTSCHRIFT

(11) **EP 2 589 579 B1**
(45) Veröffentlichungstag und Bekanntmachung des Hinweises auf die Patenterteilung: **02.09.2015**
(21) Anmeldenummer: 11008741.8
(22) Anmeldetag: 02.11.2011
(51) Int. Cl.: C04B 111/00, C04B 26/02, C04B 28/24, C04B 28/26

(54) **Zusammensetzung zur Behandlung gipsverpachtelter, gipsabgezogener oder gipsverputzler Areale und deren Verwendung zur Behandlung gipsverpachtelter, gipsabgezogener oder gipsverputzler Areale**
Compound for treating plaster filled, removed or covered areas and their to treat plaster filled, removed or covered areas
Composition destinée au traitement de zones emplâtrées, dont le plâtre est retiré ou plâtrées et son utilisation pour le traitement de zones emplâtrées, dont le plâtre est retiré ou plâtrées

(43) Veröffentlichungstag der Anmeldung: 08.05.2013
(60) Teilanmeldung: 14191382.2
(73) Patentinhaber: DAW SE, 64372 Ober-Ramstadt (DE)
(72) Erfinder: Befurt, Uwe, 64372 Ober-Ramstadt (DE); Walter, Christian, 64846 Gross-Zimmern (DE); Brenner, Thomas, 64367 Mühltal (DE)
(74) Vertreter: Metten, Karl-Heinz

(56) Entgegenhaltungen:
- EP-A1- 0 614 858
- DE-A1-102006 046 860
- DE-C1- 4 309 625
- JP-A- 2006 117 812
- US-A- 3 450 661
- US-A- 4 267 089
- Kremer: "Kaliwasserglas", , 1996, XP002675063, Gefunden im Internet: URL:http://www.kremerpigments.com/shopus/P ublishedFiles/77750.pdf [gefunden am 2012-01-10]
- Tex Color: "Innensilikat TC 1306 - Technical Data Sheet", , April 2007 (2007-04), XP002675064, Gefunden im Internet: URL:http://www.tex-color.lv/fileadmin/Date n/TM_engl/TC1306_Innensilikat.pdf [gefunden am 2012-01-11]
- MINGJIE HUA ET AL: "Verification of lime and water glass stabilized FGD gypsum as road sub-base", FUEL, Bd. 89, Nr. 8, 1. August 2010 (2010-08-01) , Seiten 1812-1817, XP055047763, ISSN: 0016-2361, DOI: 10.1016/j.fuel.2009.11.029

## Beschreibung

Die vorliegende Erfindung betrifft die Verwendung einer Zusammensetzung zur Behandlung gipsverspachtelter, gipsabgezogener oder gipsverputzter Areale sowie ein Verfahren zur Behandlung solcher gipsverspachtelter, gipsabgezogener oder gipsverputzter Areale.

Aus dem Trockenbau ist die Verspachtelung von Fugen benachbarter Gipsplatten mit Gips hinlänglich bekannt und wird schon seit sehr langer Zeit eingesetzt, um eine glatte, ebene Oberfläche zu erhalten, welche zum Beispiel mit einer Grundierung, einem Putz, einer Farbe, einem Vlies, z.B. einem Glasvlies oder einer Tapete versehen werden kann. Bei solchen gipsverspachtelten Arealen, beispielsweise bei sogenannten Q1-, Q2- und Q3-Verspachtelungen, insbesondere Q3-Verspachtelungen, kann es nach dem Aufbringen von nachfolgenden Beschichtungen mitunter aufgrund von Blasenbildung oder einer Kräuselung der Oberfläche zu einer schlechten Haftung an der Unterlage oder sogar zu einem Abplatzen kommen. Dieses Phänomen wird zum Beispiel insbesondere bei scharf abgezogenen Fugenbereichen beobachtet, bei denen die aufgetragene Gipsschicht eine geringe Dicke von z.B. weniger als 500 µm aufweist. Hierfür soll eine unvollständige Umsetzung des Hemihydrats zum Calciumsulfatdoppelhydrat verantwortlich sein. Das vorangehend geschilderte Problem ist schon seit Jahrzehnten bekannt. Eine zufriedenstellende Lösung ist bislang nicht gefunden worden. Zwischenzeitlich hatte man Carboxymethylcelluloseether (CMC) für die beobachteten Kräuselungen und Blasenbildungen verantwortlich gemacht. Allerdings lassen sich auch bei Verwendung CMC-freier Systeme die genannten Beanstandungen nicht abstellen.

JP 2006 117812 A strebt an, eine Zusammensetzung verfügbar zu machen, die sich sowohl gut mit Wandunterlagen als solchen verbindet, als auch mit auf diesen Unterlagen angebrachten Endbeschichtungen. Darüber hinaus soll die Zusammensetzung gemäß JP 2006117812 A zu Oberflächen führen, die widerstandsfähig gegen Behandlung mit heißem Wasser sind. Geeignete Zusammensetzungen basieren gemäß JP 2006117812 A auf einer Mischung aus Wasserglas und einem sehr spezifischen Vinylcopolymer, das durch Emulsionspolymerisation von einem C₁₋₁₈ Alkyl(meth)acrylat, einer eine Säuregruppe enthaltenden ungesättigten polymerisierbaren Monomerverbindung und einer Silylgruppen enthaltenden polymerisierbaren ungesättigten Monomerverbindung in Gegenwart von 0,3 bis 6 Gew.-%, bezogen auf die Menge an Monomeren, einer reaktiven Tensidverbindung erhalten wird.

DE 43 09 625 C1 schlägt vor, dass man zu lagerstabilen, koagulatfreien Formulierungen enthaltend Kaliwasserglas und Acrylatmischpolymerisate auf Kunstharzdispersionsbasis dadurch gelangt, dass man die beiden vorangehend genannten Komponenten vorübergehend unter Rühren auf ca. 50°C erwärmt.

Die US 3 450 661 A hat es sich zur Aufgabe gesetzt, besonders homogene Acrylo-Silikatbeschichtungszusammensetzungen verfügbar zu machen, die als Bindemittel für Farben und Lacke geeignet sind. Dieses soll dadurch gelingen, dass man 60 bis 95 Gewichtsteile eines Alkalisilikats und 5 bis 40 Gewichtsteile eines Copolymers aus 5 bis 50 Gewichtsteilen Acrylnitril und 10 bis 50 Gewichtsteilen Acrylsäure unter refluxierenden Bedingungen erwärmt.

Der US 4 267 089 A ist daran gelegen, eine flammgeschützte Beschichtungszusammensetzung zu erhalten, die auf Wänden appliziert werden kann. Zur Lösung dieser Aufgabe wird vorgeschlagen, eine wässrige Dispersion zu verwenden, die Nephelin, Syenit, Aluminiumhydrat, Natriumsilikat, Wollastonit, Titandioxid, Acrylharz, Zinkoxid und hydratisiertes Magnesiumaluminiumsilikat enthält.

Die DE 10 2006 046860 ist bestrebt, Zusammensetzungen bereitzustellen, die sich zu Putzen oder Farben formulieren lassen, welche sich durch gute Abriebbeständigkeit, geringe Anschmutzneigung, hohe Wasserdampfdurchlässigkeit, gute Haftung und gute Bewitterungsstabilität auszeichnen. Um dieses Ziel zu erreichen, schlägt die DE 10 2006 046860 eine Zusammensetzung vor, enthaltend einen mineralischen Füllstoff, ein Pigment, kolloidales Siliziumdioxid und eine wässrige Kunststoffdispersion, erhalten durch Emulsionspolymerisation von insgesamt vier unterschiedlichen Comonomeren. Optional können zusätzlich auch wasserlösliche Silikate oder Silikonharze zugegen sein.

Mingjie Hua et al., "Verification of lime and water glass stabilized FGD gypsum as road sub-base", 1. August 2010, beschreibt Verwendungsmöglichkeiten von aus Entschwefelungsanlagen erhaltenem Gips. Insbesondere wenn mit Wasserglas behandelt, soll sich derartiger Gips auch für den Straßenbau eignen.

Die EP 0 614 858 A1 hat sich zum Ziel gesetzt, eine Gipsbauplatte mit verbesserter Feuer- und Wasserbeständigkeit zur Verfügung zu stellen. Eine derartige Gipsbauplatte soll gemäß der EP 0 614 858 A1 dadurch erhalten werden, dass man eine Gipsaufschlämmung mit einer sogenannten Geopolymerhaftmasse vermengt, welche eine Alkalisilikatlösung, einen chemischen Härter und ein Verdickungsmittel umfasst.

Demzufolge lag der vorliegenden Erfindung die Aufgabe zugrunde, die Haftungsprobleme im Zusammenhang mit gipsverspachtelten, gipsabgezogenen oder gipsverputzten Arealen zu beheben sowie insbesondere Grundierungen, Farben und Putzmörtel zur Verfügung zu stellen, die auch auf solchen gipsverspachtelten, gipsabgezogenen oder gipsverputzten Arealen, bei denen sich der Gips schlecht bzw. nur unvollständig umgesetzt hat, Blasenbildung bzw. Kräuselung nicht zulassen und insbesondere eine gute Haftung garantieren, so dass insbesondere ein sich anschließender Farb-, Grundierungs- oder Putzauftrag nicht zu Beanstandungen führt.

Demgemäß wurde die Verwendung einer Zusammensetzung gemäß Patentanspruch 1 gefunden. Das in Wasser gelöste Silikat, ist insbesondere Wasserglas. Dieses liegt in der Zusammensetzung vorzugsweise nicht kolloidal vor. Die Zusammensetzung, insbesondere die Wasser enthaltende Zusammensetzung, ist basisch und verfügt über einen pH von größer oder gleich 9,5. In der Wasser enthaltenden Zusammensetzung liegt das in Wasser lösliche Silikat zweckmäßigerweise in Wasser gelöst vor.

Gips im Sinne der vorliegenden Erfindung umfasst reinen Gips ebenso wie Gips, enthaltend ein Bindemittel bzw. Cobindemittel, beispielsweise Vinylacetat, und/oder einen Verzögerer, beispielsweise Weinsäure. Grundsätzlich kommen alle kommerziell erhältlichen Gipsformulierungen in Betracht. Bei einem gipsverspachtelten, gipsabgezogenen oder gipsverputzten Areal im Sinne der vorliegenden Erfindung handelt es sich um eine dreidimensionale Struktur, beispielsweise in Form einer Schicht oder Beschichtung, wie sie u.a. auch von Grundierungen, Putzen oder Farben bekannt ist.

Bevorzugt ist der pH-Wert der Zusammensetzungen größer oder gleich 10,0, vorzugsweise größer oder gleich 10,5 und besonders bevorzugt größer oder gleich 11,0.

Bei dem eingesetzten Wasserglas handelt es sich um in Wasser lösliches bzw. gelöstes Wasserglas. Die wässrige Lösung wird auch als flüssiges Wasserglas bezeichnet.

Vorzugsweise wird hierbei auf Natriumwasserglas, Lithiumwasserglas und/oder Kaliumwasserglas zurückgegriffen, wobei es häufig zweckmäßig ist, Kaliumwasserglas zu verwenden. Für die Zusammensetzungen wird häufig auf eine 15 bis 40 gew.-%ige, insbesondere 20 bis 35 gew.-%ige wässrige Wasserglaslösung zurückgegriffen. In einer zweckmäßigen Ausgestaltung kann auf 28 Gew.-%ige wässrige Wasserglaslösung, insbesondere eine solche Kaliumwasserglaslösung, zurückgegriffen werden.

Die Zusammensetzungen enthalten flüssiges Wasserglas in einer Ausgestaltung in einer Menge im Bereich von 0,005 bis 23 Gew.-%, vorzugsweise 0,3 bis 10 Gew.-%.

Gemäß einer zweckmäßigen Ausführungsform liegt in den Zusammensetzungen der Masseanteil, d.h. der Feststoffanteil, bezogen auf das Gesamtgewicht der Zusammensetzung, an in Wasser gelöstem Silikat, insbesondere an Wasserglas und/oder Kieselsol, im Bereich von 0,001 bis 3,5 Gew.-%, bevorzugt im Bereich von 0,01 bis 3 Gew.-%, besonders bevorzugt im Bereich von 0,05 bis 2,5 Gew.-% und insbesondere im Bereich von 0,1 bis 2 Gew.-%.

Es hat sich als besonders vorteilhaft erwiesen, den Anteil an in Wasser gelöstem Silikat derart einzustellen, dass das in Wasser gelöste Silikat in die oberflächennahen und gegebenenfalls auch in oberflächenferne Bereiche dieser Areale eindringt bzw. eindiffundiert, bevor dieses mit den Calciumionen aus dem, insbesondere nicht abgebundenen, verspachtelten, abgezogenen oder verputzten Gips reagiert. D.h. um eine vorteilhafte Penetrationstiefe für das gelöste Silikat und die Bildung eines Gips/Silikat-Komposits zu erreichen, sollte die Zusammensetzung über eine hinreichend niedrige Konzentration an gelöstem Silikat verfügen. Bei zu hoch gewählten Konzentrationen besteht die Gefahr, dass die Reaktion mit den Calciumionen ausschließlich bzw. nahezu ausschließlich an der Gipsoberfläche stattfindet, was zu einem Verschließen der Oberfläche führen kann, mit der Folge, dass Spalte und Poren in diesen Arealen frühzeitig verblockt werden können, was eine Penetration der in Wasser gelösten Silikate, insbesondere des löslichen Wasserglases, in oberflächennahe und insbesondere oberflächenferne Bereiche verhindern würde.

Besonders zweckmäßig ist in diesem Zusammenhang auch, dass der Massenanteil an in Wasser dispergiertem organischen Bindemittel, d.h. der organische Feststoffanteil, bezogen auf das Gesamtgewicht der Zusammensetzung, größer ist, insbesondere um mindestens das zwei- oder dreifache größer ist, als der Masseanteil, d.h. der Feststoffanteil, bezogen auf das Gesamtgewicht der Zusammensetzung, an in gelöstem Silikat, insbesondere an Wasserglas und/oder Kieselsol.

Eine geeignete Ausführungsform sieht vor, dass der Massenanteil an in Wasser dispergiertem organischen Bindemittel im Bereich von 0,002 bis 30 Gew.-%, bevorzugt im Bereich von 0,02 bis 25 Gew.-%, besonders bevorzugt im Bereich von 0,1 bis 20 Gew.-% und insbesondere im Bereich von 0,2 bis 15 Gew.-% liegt.

Bevorzugt wird auch auf solche Zusammensetzungen zurückgegriffen, bei denen der Masseanteil an in Wasser gelöstem Silikat, insbesondere an Wasserglas und/oder Kieselsol, im Bereich von 0,1 bis 2 Gew.-% liegt, bei denen der Massenanteil an wasserdispergierbarem organischen Bindemittel im Bereich von 0,2 bis 15 Gew.-% liegt und bei denen der Massenanteil an in Wasser dispergiertem organischen Bindemittel größer ist, insbesondere um mindestens das zwei- oder dreifache größer ist, als der Masseanteil an in Wasser gelöstem Silikat, insbesondere an Wasserglas und/oder Kieselsol.

Das organische Bindemittel umfasst in einer bevorzugten Ausführungsform, insbesondere in wässriger Dispersion vorliegende, vorzugsweise sphärische bzw. kugelförmige, Kunststoffpartikel, insbesondere mit einem durchschnittlichen Durchmesser kleiner 3 µm, vorzugsweise kleiner 2 µm, besonders bevorzugt kleiner 1 µm, insbesondere enthaltend oder gebildet aus mindestens einem Acrylat-, Styrol-, insbesondere Styrolacrylat-, Vinylacetat-, Vinylpropionat- und/oder Urethanhomo- und/oder -copolymeren oder einer beliebigen Mischung hiervon. Die genannten Kunststoffpartikel bzw. -kugeln weisen in einer besonders zweckmäßigen Ausgestaltung einen durchschnittlichen Durchmesser kleiner 500 nm, insbesondere kleiner 250 nm oder 200 nm, beispielsweise im Bereich von 150 nm, auf. Das organische Bindemittel liegt in einer bevorzugten Ausgestatlung in Form einer Bindemitteldispersion, insbesondere in Form einer Styrolacrylatcopolymerdispersion, vor. Geeignete Polyvinylacetatdispersionen umfassen u.a. solche mit äußerer Weichmachung, z.B. mit Dibutylenhexylenglycol, und auch solche mit innerer Weichmachung. In letzterem Fall liegt das Polyvinylacetat als Copolymerisat vor, beispielsweise mit Vinylestern, Maleinaten, Fumaraten, Acrylatren oder Ethylen, oder als Terpolymerisat mit Ethylen und Vinylchlorid. Geeignete Polyvinylpropionatdispersionen nutzen Polyvinylpropionat z.B. als Homopolymerisat oder als Copolymerisat, beispielsweise mit Acrylaten. In geeigneten Polystyroldispersionen liegt Polystyrol z.B. als Homopolymerisat oder als Copolymerisat vor. Styrolcopolymerisate sind bevorzugt, z.B. solche mit Acrylaten oder Butadien. Besonders bevorzugt sind Stryrolacrylatcopolymerisate für den Einsatz als Bindemitteldispersion. Geeignete Polyacrylate können z.B. Homo- wie auch Copolymerisate umfassen. In bevorzugten Copolymerisaten kommt Acrylsäure und/oder Methacrylsäure sowie deren Ester zum Einsatz. Das organische Bindemittel stellt in einer zweckmäßigen Ausführungsform eine 30 bis 75 gew.-%ige, insbesondere 40 bis 65 gew.-%ige, wässrige Dispersion des organischen Bindemittels dar.

Die Zusammensetzungen können in einer ersten Ausgestaltung ferner Sand, insbesondere Quarzsand und/oder Quarzmehl, umfassen und können damit eine Grundierung bilden, oder sie umfassen mindestens eine Gesteins- bzw. Putzkörnung, insbesondere auf Basis von Marmor und/oder Dolomit und/oder Silikat, sowie gegebenenfalls ein anorganisches und/oder organisches Fasermaterial und können dann einen sogenannten, insbesondere pastösen, Putzmörtel für den Innen- oder Außenputz bilden. Darüber hinaus können die Zusammensetzungen bei Anwesenheit von mindestens einem Pigment auch eine Farbe darstellen. Selbstverständlich kann die Grundierung neben Sand auch Putzkörnung enthalten, und der Putzmörtel neben Putzkörnung auch Sand, wie vorangehend spezifiziert.

Die Zusammensetzungen können ferner weitere Füllstoffe und/oder Pigmente und/oder Additive umfassen. Geeignete Füllstoffe können zum Beispiel ausgewählt werden aus der Gruppe der Quarzite, Dolomite, Hektorite, Calcite, Silikate, z.B. Schichtsilikate, Vulkanite, Kieselerde und Diatomeenerden. Geeignete Pigmente können beispielsweise ausgewählt werden aus der Gruppe bestehend aus synthetischen und natürlichen anorganischen und/oder organischen Pigmenten. Bevorzugt wird in einer Variante auf Titandioxid zurückgegriffen.

Geeignete Füllstoffe können Calciumcarbonat, Silikate, insbesondere Kaolin und/oder Glimmer und/oder Talke, und/oder deren Mischungen umfassen.

Geeignete Additive können zum Beispiel ausgewählt werden aus der Gruppe bestehend aus Verdickungsmitteln, Entschäumungsmitteln, Netzmitteln, Wachspräparationen, Konservierungsmitteln, Stabilisatoren oder deren Mischungen.

Gemäß einer weiteren Ausführungsform können die Zusammensetzungen ferner mindestens ein organisches oder anorganisches Fasermaterial oder deren Mischungen enthalten. Geeignete anorganische Fasern umfassen z.B. Glasfasern und/oder Mineralfasern, geeignete organische Fasern z.B. Cellulosefasern und/oder Arcrylfasern.

Geeignete Verdickungsmittel umfassen Polysaccharide, bevorzugt Celluloseether, Acrylatverdicker, Polyurethanverdicker, natürliche oder synthetische anorganische Verdicker, insbesondere Hektorite, Bentonite und/oder Smektite, modifizierte Stärke, Xanthan, Guar oder beliebige Mischungen hiervon. Besonders bevorzugt wird auf Hydroxyethylcellulose als Verdickungsmittel zurückgegriffen.

Als besonders zweckmäßig hat sich auch die Anwesenheit einer wässrigen Silikonharzlösung, insbesondere enthaltend Kaliummethylsiliconat, in den Zusammensetzungen erwiesen.

Geeignete Wachspräparationen für die Zusammensetzungen umfassen Polyethylen-, insbesondere HD-Polyethylen-, Paraffin-, Montan-, Carnauba- und Amidwachse oder deren Mischungen.

Gemäß einem weiteren Aspekt wird die der Erfindung zugrunde liegende Aufgabe gelöst durch ein Verfahren, bei dem man eine Zusammensetzung auf mit Gips verspachtelten, gipsabgezogenen oder gipsverputzten Arealen aufträgt. Hierbei ist der Gips der gipsverspachtelten, gipsabgezogenen oder gipsverputzten Areale vorzugsweise einem Trocknungsschritt unterzogen worden ist, bevor die Zusammensetzung aufgetragen wird.

Mit Hilfe der Zusammensetzungen bzw. des erfindungsgemäßen Verfahrens erhält man ein oberflächenbehandeltes gipsverspachteltes, gipsabgezogenes oder gipsverputztes Areal. Das mit dem erfindungsgemäßen Verfahren erhältliche oberflächenbehandelte gipsverspachtelte, gipsabgezogene oder gipsverputzte Areal verfügt über eine, insbesondere ausgehärtete bzw. abgebundene, Gipsschicht mit einer Unter- und einer Oberseite, wobei die Gipsschicht mindestens im Bereich der Oberseite oder über die gesamte Dicke der Gipsschicht Calciumsilikathydrat enthält, insbesondere eine Kompositlage (d.h. der Gips/Silikat-Komposit) enthaltend Gips und, vorzugsweise darin eingebettetem, Calciumsilikathydrat aufweist bzw. bildet.

Die Kompositlage, d.h. der Gips/Silikat-Komposit, ist integraler Bestandteil der Gipsschicht bzw. bildet diese, falls das lösliche Silikat über die gesamte Dicke der Gipsschicht penetriert. Die durchschnittliche Dicke der Kompositlage entspricht im Allgemeinen der Eindringtiefe des gelösten Silikats. In einer Ausgestaltung kann die Kompositlage eine durchschnittliche Dicke von bis zu 150 µm oder von bis zu 500 µm aufweisen. In der Kompositlage liegt neben Gips regelmäßig Calciumsilikathydrat vor.

Ein Verfahren zur Herstellung eines oberflächenbehandelten gipsverspachtelten, gipsabgezogenen oder gipsverputzten Areals umfasst die Schritte
a) Erstellung eines gipsverspachtelten, gipsabgezogenen oder gipsverputzten Areals, insbesondere umfassend Bereiche mit einer Dicke kleiner etwa 500 µm, auf einem Untergrund,
b) Trocknen des gipsverspachtelten, gipsabgezogenen oder gipsverputzten Areals,
c) Aufbringen der Zusammensetzung auf das gipsverspachtelte, gipsabgezogene oder gipsverputzte Areal,
d) Trocknen der auf das gipsverspachtelte, gipsabgezogene oder gipsverputzte Areal aufgebrachten Zusammensetzung und
e) gegebenenfalls Aufbringen einer Farbe, einer Tapete, eines Putzes, eines Vlieses oder einer anderweitigen Beschichtung oder Abdeckung auf das die Zusammensetzung aufweisende gipsverspachtelte, gipsabgezogene oder gipsverputzte Areal.

Ein Verfahren zur Herstellung der Zusammensetzung umfasst die Schritte
a) Zurverfügungstellung von in Wasser gelöstem Silikat, insbesondere Wasserglas, besonders bevorzugt Kaliumwasserglas, vorzugsweise als 15 bis 40 gew.-%ige, insbesondere 20 bis 35 gew.-%ige, wässrige Lösung von Silikat bzw. Wasserglas,
b) Zurverfügungstellung von in Wasser dispergiertem organischen Bindemittel, insbesondere in Form von Kunststoffpartikeln, insbesondere -kugeln, vorzugsweise mit einem durchschnittlichen Durchmesser kleiner 3 µm, vorzugsweise kleiner 2 µm,
c) Vermischen der in Schritt a) und b) erhaltenen Lösung bzw. Dispersion und
d) gegebenenfalls Einstellen des pH Wertes der Zusammensetzung auf einen Wert größer oder gleich 9,5. Hierbei kann das in Wasser dispergierte Bindemittel z.B. eine 30 bis 75 gew.-%ige, insbesondere 40 bis 60 gew.-%ige, wässrige Bindemitteldispersion darstellen.

Die Zusammensetzungen eignen sich für die Behandlung gipsverspachtelter, gipsabgezogener oder gipsverputzter Areale. Mit diesen Zusammensetzungen lassen sich insbesondere Ablösungen bei gipsverspachtelten, gipsabgezogenen oder gipsverputzten Arealen verhindern, d.h. nachfolgend aufgebrachte Beschichtungen, z.B. Farbanstriche zeigen stets eine einwandfreie Haftung und eine makellose Oberfläche. Mit den Zusammensetzungen gelingt demgemäß die Deaktivierung von nicht abgebundenem Gips bei gipsverspachtelten, gipsabgezogenen oder gipsverputzten Arealen, und zwar insbesondere auch bei gerade solchen Arealen mit einer kritischen Dicke unterhalb von 500 µm.

Exemplarische erfindungsgemäße Zusammensetzungen können als Putzmörtel, Grundierung und als Farbe gewichtsanteilig wie folgt aufgebaut sein:

### Putzmörtel:

| | |
|---|---|
| Wasser | 10 - 36 Gew.-%, bevorzugt 15 - 25 Gew.-%, |
| Pigment | 0 -10 Gew.-%, bevorzugt 1,5 - 5 Gew.-%, |
| Füllstoffe | 40 - 89,8 Gew.-%, bevorzugt 46,5 - 81, 8 Gew.-%, |
| Fasern | 0 - 10 Gew.-%, bevorzugt 0,5 - 5 Gew.-%, |
| Wachspräparation | 0 - 10, Gew.-% bevorzugt 0,1 - 5 Gew.-%, |
| Bindemitteldispersion | 0.1 - 10 Gew.-%, bevorzugt 0,5 - 6 Gew.-%, |
| Wasserglas | 0,1 - 4 Gew.-%, bevorzugt 0,5 - 2,5 Gew.-%, |
| Additiv | 0 - 10 Gew.-%, bevorzugt 0,1 - 5 Gew.-%. |

### Grundierung:

| | |
|---|---|
| Wasser | 20 - 55 Gew.-%, bevorzugt 22 - 40 Gew.-%, |
| Pigment | 0 - 10 Gew.-%, bevorzugt 1,5 - 5 Gew.-%, |
| Füllstoffe | 20 - 79,4 Gew.-%, bevorzugt 27,5 - 74,9 Gew.-%, |
| Wachspräparation | 0 - 10 Gew.-%, bevorzugt 0,1 - 5 Gew.-%, |
| Bindemitteldispersion | 0.5 - 20 Gew.-%, bevorzugt 0,5 - 15 Gew.-%, |
| Wasserglas | 0,1 - 5 Gew.-%, bevorzugt 0,5 - 2,5 Gew.-%, |
| Additiv | 0 - 10 Gew.-%, bevorzugt 0,5 - 5 Gew.-%. |

### Farbe:

| | |
|---|---|
| Wasser | 15 - 78,3 Gew.-%, bevorzugt 20 - 70 Gew.-%, |
| Pigment | 1 - 15 Gew.-%, bevorzugt 1,5 - 12 Gew.-%, |
| Füllstoffe | 20 - 53 Gew.-%, bevorzugt 27 - 51,5 Gew.-%, |
| Bindemitteldispersion | 0.5 - 12 Gew.-%, bevorzugt 0,5 - 10 Gew.-%, |
| Wasserglas | 0,1 - 5 Gew.-%, bevorzugt 0,5 - 2,5 Gew.-%, |
| Additiv | 0 - 5 Gew.-%, bevorzugt 0,5 - 4 Gew.-%. |

Der vorliegenden Erfindung lag die überraschende Erkenntnis zugrunde, dass die mit gipsverspachtelten, gipsabgezogenen und gipsverputzten Arealen bislang einhergehenden Probleme in Bezug auf Ablösung, Blasenbildung bzw. Kräuselung sich durch Behandlung mit der vorrausgehend beschriebenen Zusammensetzung abstellen lassen. Dabei ist als besonderer Vorteil hervorzuheben, dass auch zunächst nur unvollständig abgebundener Gips nicht zu Haftungsproblemen führt, und zwar insbesondere auch nicht in den Bereichen, in denen die aufgetragene Gipsschicht Dicken unterhalb von 500 µm aufweist. Als weiterer Vorteil ist zu nennen, dass die erfindungsgemäßen Zusammensetzungen, insbesondere auch als Putzmörtel, Grundierung oder Farbe, nicht über herkömmliche Konservierungsmittel zu verfügen haben, um lagerstabil zu sein.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verwendung einer Wasser enthaltenden Zusammensetzung umfassend mindestens ein in Wasser gelöstes Silikat, insbesondere mindestens ein in Wasser gelöstes Wasserglas und/oder Kieselsol, und mindestens ein in Wasser dispergiertes organisches Bindemittel, wobei der pH-Wert dieser Zusammensetzung basisch ist, für die Behandlung gipsverspachtelter, gipsabgezogener oder gipsverputzter Areale.

2. Verwendung nach Anspruch 1, **dadurch gekennzeichnet, dass** der pH-Wert der Zusammensetzung größer oder gleich 9,5, vorzugsweise größer oder gleich 10,5 und besonders bevorzugt größer oder gleich 11,0 ist.

3. Verwendung nach Anspruch 1 oder 2, **dadurch gekennzeichnet, dass** bei der Zusammensetzung der Massenanteil an in Wasser gelöstem Silikat, insbesondere an Wasserglas und/oder Kieselsol, bezogen auf das Gesamtgewicht der Zusammensetzung, im Bereich von 0,001 bis 3,5 Gew.-%, bevorzugt im Bereich von 0,01 bis 3 Gew.-%, besonders bevorzugt im Bereich von 0,05 bis 2,5 Gew.-% und insbesondere im Bereich von 0,1 bis 2 Gew.-% liegt.

4. Verwendung nach einem der vorangehenden Ansprüche, **dadurch gekennzeichnet, dass** bei der Zusammensetzung der Massenanteil an in Wasser dispergiertem organischen Bindemittel größer ist, insbesondere um mindestens das zwei- oder dreifache größer ist, als der Massenanteil an in Wasser gelöstem Silikat, insbesondere an Wasserglas und/oder Kieselsol.

5. Verwendung nach einem der vorangehenden Ansprüche, **dadurch gekennzeichnet, dass** bei der Zusammensetzung der Massenanteil an in Wasser dispergiertem organischen Bindemittel, bezogen auf das Gesamtgewicht der Zusammensetzung, im Bereich von 0,002 bis 30 Gew.-%, bevorzugt im Bereich von 0,02 bis 25 Gew.-%, besonders bevorzugt im Bereich von 0,1 bis 20 Gew.-% und insbesondere im Bereich von 0,2 bis 15 Gew.% liegt.

6. Verwendung nach einem der vorangehenden Ansprüche, **dadurch gekennzeichnet, dass** das Wasserglas Natriumwasserglas, Lithiumwasserglas und/oder Kaliumwasserglas oder eine beliebige Mischung hiervon, insbesondere Kaliumwasserglas, darstellt.

7. Verwendung nach einem der vorangehenden Ansprüche, **dadurch gekennzeichnet, dass** das organische Bindemittel, insbesondere sphärische, Kunststoffpartikel, insbesondere mit einem durchschnittlichen Durchmesser kleiner 3 µm, vorzugsweise kleiner 2 µm, umfasst, insbesondere enthaltend oder gebildet aus mindestens einem Acrylat-, Styrol-, insbesondere Styrolacrylat-, Vinylacetat-, Vinylpropionat- und/oder Polyurethanhomo- und/oder -copolymeren oder einer beliebigen Mischung hiervon.

8. Verwendung nach einem der vorangehenden Ansprüche, **dadurch gekennzeichnet, dass** die Zusammensetzung Sand, insbesondere Quarzsand und/oder Quarzmehl, und/oder mindestens eine Putzkörnung und/oder mindestens ein Pigment umfasst.

9. Verwendung nach einem der vorangehenden Ansprüche, **dadurch gekennzeichnet, dass** die Zusammensetzung weitere Füllstoffe und/oder Additive und/oder mindestens ein organisches oder anorganisches Fasermaterial oder deren Mischungen umfasst.

10. Verwendung nach einem der vorangehenden Ansprüche, **dadurch gekennzeichnet, dass** die Zusammensetzung eine wässrige Silikonharzlösung, insbesondere Kaliummethylsiliconat, umfasst.

11. Verwendung nach einem der Ansprüche 1 bis 10 zur Verhinderung von Ablösungen bei gipsverspachtelten, gipsabgezogenen oder gipsverputzten Arealen und/oder zur Deaktivierung von nicht abgebundenem Gips bei gipsverspachtelten, gipsabgezogenen oder gipsverputzten Arealen.

12. Verwendung nach einen der vorangehenden Ansprüche, **dadurch gekennzeichnet, dass** die Areale zumindest abschnittsweise eine Dicke kleiner 500 µm aufweisen.

13. Verfahren zur Behandlung gipsverspachtelter, gipsabgezogener oder gipsverputzter Areale, **dadurch gekennzeichnet, dass** man eine Zusammensetzung gemäß einem der Ansprüche 1 bis 10 auf mit Gips verspachtelten, abgezogenen oder verputzten Arealen aufträgt, wobei der Gips der gipsverspachtelten, gipsabgezogenen oder gipsverputzten Areale insbesondere einem Trocknungsschritt unterzogen worden ist, bevor die Zusammensetzung gemäß den Ansprüchen 1 bis 10 aufgetragen wird.

## Claims

1. Usage of a composition containing water comprising at least one silicate dissolved in water, in particular at least one water glass and/or silica sol dissolved in water, and at least one organic binding agent dispersed in water, wherein the pH value of this composition is alkaline, for treating gypsum plastered, gypsum plaster ruled-off or gypsum plaster covered areas.

2. The usage according to Claim 1, **characterized in that** the pH value of the composition is greater than or equal to 9.5, preferably greater than or equal to 10.5 and particularly preferably greater than or equal to 11.0.

3. The usage according to Claim 1 or 2, **characterized in that** for the composition the mass fraction of silicate dissolved in water, in particular of water glass and/or silica sol, based on the total weight of the composition, is in the range of 0.001 to 3.5% by weight, preferably in the range of 0.01 to 3% by weight, particularly preferably in the range of 0.05 to 2.5% by weight and, in particular, in the range of 0.1 to 2% by weight.

4. The usage according to any one of the preceding claims, **characterized in that** for the composition the mass fraction of organic binding agent dispersed in water is greater, in particular is at least two or three times greater, than the mass fraction of silicate dissolved in water, in particular of water glass and/or silica sol.

5. The usage according to any one of the preceding claims, **characterized in that** for the composition the mass fraction of organic binding agent dispersed in water, based on the total weight of the composition, is in the range of 0.002 to 30% by weight, preferably in the range of 0.02 to 25% by weight, particularly preferably in the range of 0.1 to 20% by weight and, in particular, in the range of 0.2 to 15% by weight.

6. The usage according to any one of the preceding claims, **characterized in that** the water glass constitutes sodium water glass, lithium water glass and/or potassium water glass or any mixture hereof, in particular potassium water glass.

7. The usage according to any one of the preceding claims, **characterized in that** the organic binding agent comprises, in particular spherical, plastic particles, in particular having an average diameter of less than 3 µm, preferably less than 2 µm, in particular containing or formed from at least one acrylate, styrene, in particular styrene acrylate, vinyl acetate, vinyl propionate and/or polyurethane homopolymer and/or copolymer or any mixture hereof.

8. The usage according to any one of the preceding claims, **characterized in that** the composition comprises sand, in particular quartz sand and/or quartz powder, and/or at least one plaster granulation and/or at least one pigment.

9. The usage according to any one of the preceding claims, **characterized in that** the composition comprises additional fillers and/or additives and/or at least one organic or inorganic fibrous material or mixtures thereof.

10. The usage according to any one of the preceding claims, **characterized in that** the composition comprises an aqueous silicone resin solution, in particular potassium methyl siliconate.

11. The usage according to any one of Claims 1 to 10 for preventing peeling off with gypsum plastered, gypsum plaster ruled-off or gypsum plaster covered areas and/or for deactivating non-hardened plaster of gypsum plastered, gypsum plaster ruled-off or gypsum plaster covered areas.

12. The usage according to any one of the preceding claims, **characterized in that** the areas comprise, at least in sections, a thickness of less than 500µm.

13. A method for treating gypsum plastered, gypsum plaster ruled-off or gypsum plaster covered areas, **characterized in that** a composition according to any one of Claims 1 to 10 is applied to gypsum plastered, gypsum plaster ruled-off or gypsum plaster covered areas, wherein the plaster of the gypsum plastered, gypsum plaster ruled-off or gypsum plaster covered areas has, in particular, been subjected to a drying step, before the composition is applied according to Claims 1 to 10.

## Revendications

1. Utilisation d'une composition contenant de l'eau, comprenant au moins un silicate dissous dans de l'eau, en particulier au moins un verre liquide dissous dans de l'eau et/ou un sol de silice, et au moins un liant organique dispersé dans de l'eau, le pH de cette composition étant basique, destinée au traitement de zones emplâtrées, dont le plâtre est retiré ou plâtrées.

2. Utilisation selon la revendication 1, **caractérisée en ce que** le pH de la composition est supérieur ou égal à 9,5, de préférence supérieur ou égal à 10,5 et de façon particulièrement préférée supérieur ou égal à 11,0.

3. Utilisation selon la revendication 1 ou 2, **caractérisée en ce que**, dans la composition, la fraction massique de silicate dissous dans de l'eau, en particulier de verre liquide et/ou de sol de silice, rapportée au poids total de la composition, se situe dans la plage de 0,001 à 3,5 %-poids, de préférence dans la plage de 0,01 à 3 %-poids, de façon particulièrement préférée dans la plage de 0,05 à 2,5 %-poids et en particulier dans la plage de 0,1 à 2 %-poids.

4. Utilisation selon l'une des revendications précédentes, **caractérisée en ce que**, dans la composition, la fraction massique de liant organique dispersé dans de l'eau est plus élevée, en particulier au moins deux ou trois fois plus élevée, que la fraction massique de silicate dispersé dans de l'eau, en particulier de verre liquide et/ou de sol de silice.

5. Utilisation selon l'une des revendications précédentes, **caractérisée en ce que**, dans la composition, la fraction massique de liant organique dispersé dans de l'eau, rapportée au poids total de la composition, se situe dans la plage de 0,002 à 30 %-poids, de préférence dans la plage de 0,02 à 25 %-poids, de façon particulièrement préférée dans la plage de 0,1 à 20 %-poids et en particulier dans la plage de 0,2 à 15 %-poids.

6. Utilisation selon l'une des revendications précédentes, **caractérisée en ce que** le verre liquide est du verre liquide au sodium, du verre liquide au lithium et/ou du verre liquide au potassium ou un mélange quelconque de ceux-ci, en particulier du verre liquide au potassium.

7. Utilisation selon l'une des revendications précédentes, **caractérisée en ce que** le liant organique comprend des particules de matière plastique, en particulier sphériques, en particulier avec un diamètre moyen inférieur à 3 µm, de préférence inférieur à 2 µm, en particulier contenant ou composées d'au moins un homopolymère et/ou d'un copolymère d'acrylate, de styrène, en particulier d'acrylate de styrène, d'acétate de vinyle, de propionate de vinyle et/ou de polyuréthane ou d'un mélange quelconque de ceux-ci.

8. Utilisation selon l'une des revendications précédentes, **caractérisée en ce que** la composition comprend du sable, en particulier du sable de quartz et/ou de la poudre de quartz et/ou au moins une granulation d'enduit et/ou au moins un pigment.

9. Utilisation selon l'une des revendications précédentes, **caractérisée en ce que** la composition comprend d'autres charges et/ou additifs et/ou au moins un matériau fibreux organique ou anorganique ou leurs mélanges.

10. Utilisation selon l'une des revendications précédentes, **caractérisée en ce que** la composition comprend une solution de résine silicone aqueuse, en particulier un méthylsiliconate de potassium.

11. Utilisation selon l'une des revendications 1 à 10, destinée à empêcher des décollements aux zones emplâtrées, dont le plâtre est retiré ou plâtrées et/ou destinée à la désactivation de plâtre non pris aux zones emplâtrées, dont le plâtre est retiré ou plâtrées.

12. Utilisation selon l'une des revendications précédentes, **caractérisée en ce que** les zones présentent, au moins par tronçons, une épaisseur inférieure à 500 µm.

13. Procédé destiné au traitement de zones emplâtrées, dont le plâtre est retiré ou plâtrées, **caractérisé en ce que** l'on applique une composition selon une des revendications 1 à 10 sur des zones emplâtrées, dont le plâtre est retiré ou plâtrées, le plâtre des zones emplâtrées, dont le plâtre est retiré ou plâtrées ayant été en particulier soumis à une étape de séchage avant l'application de la composition selon les revendications 1 à 10.
